# EUROPÄISCHE PATENTSCHRIFT

(11) **EP 3 739 009 B1**
(45) Veröffentlichungstag und Bekanntmachung des Hinweises auf die Patenterteilung: **04.12.2024**
(21) Anmeldenummer: 19174600.7
(22) Anmeldetag: 15.05.2019
(51) Int. Cl.: C09D 11/101, C09D 11/102, C09D 11/107, C09D 11/30

(54) **LAMINIERBARE TINTE**
LAMINATING INK
ENCRE LAMINABLE

(43) Veröffentlichungstag der Anmeldung: 18.11.2020
(73) Patentinhaber: Akzenta Paneele + Profile GmbH, 56759 Kaisersesch (DE)
(72) Erfinder: Hannig, Hans-Jürgen, 51427 Bergisch Gladbach (DE); Hüllenkremer, Felix, 56076 Koblenz (DE)
(74) Vertreter: Michalski Hüttermann & Partner Patentanwälte mbB

(56) Entgegenhaltungen:
- EP-A1- 3 002 321
- EP-A1- 3 095 614
- EP-A2- 2 842 763
- WO-A1-2008/004002
- WO-A1-2013/019821
- WO-A1-2015/173552
- US-A1- 2018 371 270
- US-B2- 8 580 878

## Beschreibung

Die vorliegende Erfindung betrifft eine laminierbare Tinte, die Verwendung einer laminierbaren Tinte, ein Dekorpaneel aufweisend eine Dekorschicht aus laminierbarer Tinte und ein Verfahren zur Herstellung eines Dekorpaneels aufweisend eine Dekorschicht aus laminierbarer Tinte.

Dekorative Oberflächen finden vielseitig Anwendung um ein ansprechendes und individualisiertes Aussehen zu erzeugen. Dabei werden Oberflächen häufig mit einem Dekor mittels verschiedener Druckverfahren versehen. Tinten werden dabei in gewünschten Mustern auf eine Oberfläche übertragen und anschließend fixiert um eine Dekorschicht zu bilden. In vielen Bereichen hat es sich dabei bewährt strahlungshärtende Tinten zu verwenden, da diese kurz nach dem Übertragen auf die zu bedruckende Oberfläche mittels Strahlung, wie UV- oder Elektronenstrahlung, gehärtet werden können, so dass sie nicht verfließen und Dekorschichten mit besonders scharfen Mustern erzeugt werden können. Insbesondere finden derartige Tinten Anwendung, wenn auf nicht saugfähige Untergründe gedruckt wird.

Insbesondere in der Herstellung individualisierter dekorativer Oberflächen findet der Tintenstrahldruck häufig Anwendung. Dabei wird Tinte über computergesteuerte Düsen nach einer Vorlage auf die zu bedruckende Oberfläche übertragen. Strahlungshärtende Tinten können dabei in bekannter Weise nach dem Tintenstrahldrucken mit Strahlung fixiert werden.

Vermehrt werden auch funktionale Oberflächen mit Oberflächendekoren versehen. Beispielsweise weisen Wand-, Decken- und Bodenpaneele mit Dekoren eine funktionale Oberfläche auf.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, wie beispielweise einer mitteldichten Faserplatte (MDF) oder hochdichten Faserplatte (HDF, einem Holz-Kunststoff-Kompositwerkstoff (WPC) oder einem Mineral-Kunststoff-Kompositwerkstoff (MPC), der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Im Fall von MDF- oder HDF-Trägem ist die Dekorschicht üblicherweise auf einem auf den Träger angeordneten Druckuntergrund aufgebracht, der beispielsweise aus einer Papierschicht gebildet seien kann. Dabei ist es bekannt, die Dekorschicht bereits vor dem Aufbringen der Papierschicht auf den Träger auf die Papierschicht aufzudrucken oder auch eine zunächst unbedruckte Papierschicht auf den Träger aufzubringen und die Dekorschicht anschließend mittels sogenannter Direktdruckverfahren auf die Papierschicht aufzubringen. Im Fall von auf Kunststoff-Kompositwerkstoffen beruhenden Trägern ist es bekannt, diese nach ggf. Aufbringen eines Druckuntergrundes im Direktdruckverfahren mit einem Dekor zu versehen.

Derartige dekorierte Oberflächen müssen zumeist hohe Anforderungen bezüglich mechanischen Abriebes, Schmutzresistenz, Schlagfestigkeit und dergleichen erfüllen. Häufig wird deshalb in der Regel auf eine dekorierte Oberfläche eine Verschließ- oder Deckschicht aufgebracht. Vielfach ist es vorgesehen, dass in solche Verschleiß- oder Deckschichten eine eine Dekorvorlage imitierende Oberflächenstrukturierung eingebracht ist, so dass die Oberfläche des Dekorpaneels eine haptisch wahrnehmbare Struktur aufweist, welche ihrer Form und ihrem Muster dem aufgebrachten Dekor angepasst ist, um so eine möglichst originalgetreue Nachbildung eines natürlichen Werkstoffes auch hinsichtlich der Haptik zu erhalten.

Verschließ- oder Deckschicht werden dabei häufig unter Druck- und Temperatureinwirkung aufgebracht. Derartige Verfahren werden auch Laminieren genannt.

Wichtig ist dabei, dass die auf die Dekorschicht aufgetragenen weiteren Schichten gut an der Dekorschicht haften, beziehungsweise möglichst einen Verbund mit einer ausreichenden Verbundfestigkeit, insbesondere mit einer ausreichenden physikalischen oder chemischen Verbundfestigkeit, bilden. Strahlungshärtende Tinten zur Dekoration von Substraten sind zum Beispiel aus der WO 2013/019821 oder EP 2842763 bekannt.

Es gibt deswegen ein Bedürfnis, strahlungshärtende Tinten mit einer nach dem Strahlungshärten erreichbaren guten Verbindbarkeit zu weiteren Schichten bereitzustellen. Ein Nachteil von bekannten strahlungshärtenden Tinten ist, dass sie sich durch das Härten nicht mehr gut mit weiteren Schichten verbinden lassen. Entsprechend sind bekannte strahlungshärtende Tinten nur schlecht laminierbar. Bisher wird eine Verbindung zumeist durch Auftragen eines Klebstoffes auf die Dekorschicht realisiert. Dafür ist jedoch zumindest ein zusätzlicher Prozessschritt notwendig.

Es ist daher die Aufgabe der vorliegenden Erfindung, eine verbesserte laminierbare Tinte bereitzustellen.

Gelöst wird diese Aufgabe durch laminierbare Tinten gemäß Anspruch 1 sowie ferner durch eine Verwendung derartiger laminierbaren Tinten gemäß Anspruch 13, Paneele aufweisend eine Dekorschicht aus laminierbarer Tinte nach Anspruch 14 und ein Verfahren zur Herstellung derartiger Paneele nach Anspruch 15. Bevorzugte Ausgestaltungen der Erfindung sind in den Unteransprüchen, in der Beschreibung oder den Beispielen angegeben, wobei weitere in den Unteransprüchen oder in der Beschreibung oder den Beispielen beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird eine laminierbare Tinte vorgeschlagen, aufweisend
eine strahlungshärtbare Tinte vorzugsweise in einer Menge, bezogen auf die laminierbare Tinte, von ≥ 50 Gew.-% bis ≤ 99 Gew.-%, vorzugsweise ≥ 70 Gew.-% bis ≤ 95 Gew.-%, besonders bevorzugt von ≥ 80 Gew.-% bis ≤ 90 Gew.-%, und
ein thermisch aktivierbares Matrixmaterial vorzugsweise in einer Menge, bezogen auf die laminierbare Tinte, von ≥ 1 Gew.-% bis ≤ 50 Gew.-%, vorzugsweise ≥ 5 Gew.-% bis ≤ 30 Gew.-%, besonders bevorzugt von ≥ 10 Gew.-% bis ≤ 20 Gew.-%,
wobei das Matrixmaterial zumindest ein thermisch aktivierbares Polymer aufweist, vorzugsweise in einer Menge, bezogen auf die laminierbare Tinte, von ≥ 1 Gew.-% bis ≤ 30 Gew.-%, vorzugsweise >_ 5 Gew.-% bis ≤ 20 Gew.-%, besonders bevorzugt von ≥ 10 Gew.-% bis ≤ 15 Gew.-%.

Es konnte in überraschender Weise gezeigt werden, dass mit einer derartigen laminierbare Tinte insbesondere mittels Tintenstrahldruck eine Dekorschicht herstellbar ist, die laminierbare Tinte weiterhin strahlungshärtbar ist und nach einem Strahlungshärten laminiert werden kann, wobei eine gute Verbundfestigkeit mit dem Laminat erhalten werden kann, ohne vor dem Laminieren zusätzlich einen Klebstoff auf die Dekorschicht aufzubringen.

Unter einer strahlungshärtbaren Tinte sind im Sinne der vorliegenden Erfindung Tinten, also färbende Flüssigkeiten, zu verstehen, die induziert durch elektromagnetische Strahlung geeigneter Wellenlänge, wie z.B. UV-Strahlung, oder Elektronenstrahlung zumindest teilweise reagieren und sich verfestigen.

Unter einem thermisch aktivierbaren Polymer ist im Sinne der vorliegenden Erfindung ein Polymer zu verstehen, welches durch Temperatureinwirkung erweicht oder sich verflüssigt und weiter polymerisieren oder vernetzen kann, insbesondere auch nach einem Strahlungshärten. In einer bevorzugten Ausgestaltung der Erfindung kann vorgesehen sein, dass die strahlungshärtbare Tinte ein Monomer, ein Oligomer, einen Photoinitiator, einen Stabilisator, ein Dispergiermittel und/oder einen Farbstoff aufweist.

In einer bevorzugten Ausgestaltung der Erfindung kann vorgesehen sein, dass die strahlungshärtbare Tinte ein Monomer aufweist, vorzugsweise in einer Menge, bezogen auf die laminierbare Tinte, von ≥ 25 Gew.-% bis ≤ 60 Gew.-%, besonders bevorzugt von ≥ 30 Gew.-% bis ≤ 50 Gew.-%.

Unter einem Monomer sind im Sinne der vorliegenden Erfindung organische Moleküle zu verstehen, die initiiert durch Photoinitiatoren eine Polymerisationsreaktion eingehen und Polymere bilden. Monomere dienen zunächst als Verdünnungsmittel, damit die laminierbare Tinte druckbar ist und dienen bei einer Polymerisation insbesondere zur Härtung und Quervernetzung der Tinte. Insoweit können Monomere in Sinne dieser Erfindung Reaktivverdünner sein, welche einen Einfluss auf die Viskosität der Tintenzusammensetzung haben und selbst in einer photoinitiierten Polymerisationsreaktion zu entsprechenden Polymeren vernetzten.

In einer bevorzugten Ausgestaltung der Erfindung kann vorgesehen sein, dass die strahlungshärtbare Tinte ein Oligomer aufweist, vorzugsweise in einer Menge, bezogen auf die laminierbare Tinte, von ≥ 5 Gew.-% bis ≤ 50 Gew.-%, vorzugsweise ≥ 8 Gew.-% bis ≤ 40 Gew.-%, besonders bevorzugt von ≥ 10 Gew.-% bis ≤ 20 Gew.-%.

Unter einem Oligomer sind im Sinne der vorliegenden Erfindung Polymere mit einem niedrigen Molekulargewicht zu verstehen, die nur eine geringe Anzahl an Wiederholungseinheiten aufweisen. Oligomere dienen der Haftung an die zu bedruckende Oberfläche und bei einer Polymerisation insbesondere auch der Härtung und Quervernetzung.

In einer bevorzugten Ausgestaltung der Erfindung kann vorgesehen sein, dass die strahlungshärtbare Tinte einen Photoinitiator aufweist, vorzugsweise in einer Menge, bezogen auf die laminierbare Tinte, von ≥ 1 Gew.-% bis ≤ 10 Gew.-%, vorzugsweise ≥ 3 Gew.-% bis ≤ 8 Gew.-%, besonders bevorzugt von ≥ 4 Gew.-% bis ≤ 6 Gew.-%.

Unter einen Photoinitiator sind im Sinne der vorliegenden Erfindung Verbindungen zu verstehen, welche unter Absorption elektromagnetischer Strahlung, insbesondere unter Absorption von Licht, wie beispielsweise UV-Licht, eine Reaktion eingehen und eine reaktive Verbindung bilden, die eine Polymerisationsreaktion in Gang setzen kann.

In einer bevorzugten Ausgestaltung der Erfindung kann vorgesehen sein, dass die strahlungshärtbare Tinte einen Stabilisator aufweist, vorzugsweise in einer Menge, bezogen auf die laminierbare Tinte, von ≥ 1 Gew.-% bis ≤ 3 Gew.-%, besonders bevorzugt von ≥ 1,5 Gew.-% bis ≤ 2,5 Gew.-%.

Unter einem Stabilisator sind im Sinne der vorliegenden Erfindung Verbindungen zu verstehen, die die Stabilität einer Zusammensetzung verbessern.

In einer bevorzugten Ausgestaltung der Erfindung kann vorgesehen sein, dass die strahlungshärtbare Tinte ein Dispergiermittel aufweist, vorzugsweise in einer Menge, bezogen auf die laminierbare Tinte, von ≥ 1 Gew.-% bis ≤ 3 Gew.-%, besonders bevorzugt von ≥ 1,5 Gew.-% bis ≤ 2,5 Gew.-%.

Unter einem Dispergiermittel sind im Sinne der vorliegenden Erfindung Verbindungen zu verstehen, die Dispersionen stabilisieren. Dispergiermittel absorbieren beispielsweise an der Oberfläche von zu dispergierenden Partikeln und verhindern so eine Partikelagglomeration.

In einer bevorzugten Ausgestaltung der Erfindung kann vorgesehen sein, dass die strahlungshärtbare Tinte einen Farbstoff aufweist, vorzugsweise in einer Menge, bezogen auf die laminierbare Tinte, von ≥ 1 Gew.-% bis ≤ 60 Gew.-%, vorzugsweise ≥ 10 Gew.-% bis ≤ 50 Gew.-%, besonders bevorzugt von ≥ 20 Gew.-% bis ≤ 40 Gew.-%.

Unter einem Farbstoff sind im Sinne der vorliegenden Erfindung Verbindungen zu verstehen, die eine charakteristische Farbe aufweisen.

In einer bevorzugten Ausgestaltung der Erfindung kann vorgesehen sein, dass die strahlungshärtbare Tinte ein Monomer in einer Menge von ≥ 25 Gew.-% bis ≤ 60 Gew.-%, besonders bevorzugt von ≥ 30 Gew.-% bis ≤ 50 Gew.-%, ein Oligomer in einer Menge von ≥ 5 Gew.-% bis ≤ 50 Gew.-%, vorzugsweise ≥ 8 Gew.-% bis ≤ 40 Gew.-%, besonders bevorzugt von ≥ 10 Gew.-% bis ≤ 20 Gew.-%, einen Photoinitiator in einer Menge von ≥ 1 Gew.-% bis ≤ 10 Gew.-%, vorzugsweise ≥ 3 Gew.-% bis ≤ 8 Gew.-%, besonders bevorzugt von ≥ 4 Gew.-% bis ≤ 6 Gew.-%, einen Stabilisator in einer Menge von ≥ 1 Gew.-% bis ≤ 3 Gew.-%, besonders bevorzugt von ≥ 1,5 Gew.-% bis ≤ 2,5 Gew.-%, ein Dispergiermittel in einer Menge von ≥ 1 Gew.-% bis ≤ 3 Gew.-%, besonders bevorzugt von ≥ 1,5 Gew.-% bis ≤ 2,5 Gew.-% und einen Farbstoff in einer Menge von ≥ 1 Gew.-% bis ≤ 60 Gew.-%, vorzugsweise ≥ 10 Gew.-% bis ≤ 50 Gew.-%, besonders bevorzugt von ≥ 20 Gew.-% bis ≤ 40 Gew.-%, aufweist, bezogen auf die laminierbare Tinte.

Dadurch kann vorteilhafter Weise erreicht werden, dass die laminierbare Tinte gut strahlungshärtbar ist, stabil ist, gute Farbeigenschaften aufweist und die Laminierbarkeit nicht nachteilig beeinflusst wird.

In einer bevorzugten Ausgestaltung der Erfindung kann vorgesehen sein, dass das thermisch aktivierbare Matrixmaterial ein Makromer aufweist, vorzugsweise in einer Menge, bezogen auf die laminierbare Tinte, von ≥ 1 Gew.-% bis ≤ 10 Gew.-%, besonders bevorzugt von ≥ 2 Gew.-% bis ≤ 5 Gew.-%.

Unter einem Makromer sind im Sinne der vorliegenden Erfindung makromolekulare Verbindungen zu verstehen, die eine reaktive Endgruppe aufweisen und somit polymerisierbar sind. Makromere verändern dabei beispielsweise die freie Oberflächenenergie von Beschichtungen und helfen bei der Haftung.

In einer bevorzugten Ausgestaltung der Erfindung kann vorgesehen sein, dass das thermisch aktivierbare Matrixmaterial ein Lösungsmittel aufweist, vorzugsweise in einer Menge, bezogen auf die laminierbare Tinte, von ≥ 0 Gew.-% bis ≤ 5 Gew.-%, vorzugsweise ≥ 1 Gew.-% bis ≤ 3 Gew.-%, besonders bevorzugt von ≥ 1,5 Gew.-% bis ≤ 2,5 Gew.-%.

Unter einem Lösungsmittel sind im Sinne der vorliegenden Erfindung Flüssigkeiten zu verstehen, die das Polymer lösen.

In einer bevorzugten Ausgestaltung der Erfindung kann vorgesehen sein, dass das thermisch aktivierbare Matrixmaterial ein Makromer in einer Menge von ≥ 1 Gew.-% bis ≤ 10 Gew.-%, besonders bevorzugt von ≥ 2 Gew.-% bis ≤ 5 Gew.-% und optional ein Lösungsmittel in einer Menge von ≥ 0 Gew.-% bis ≤ 5 Gew.-%, vorzugsweise ≥ 1 Gew.-% bis ≤ 3 Gew.-%, besonders bevorzugt von ≥ 1,5 Gew.-% bis ≤ 2,5 Gew.-% aufweist, bezogen auf die laminierbare Tinte.

Dadurch kann vorteilhafter Weise erreicht werden, dass die laminierbare Tinte eine gute Laminierbarkeit aufweist, ohne die Strahlungshärtbarkeit, die Stabilität und die Farbeigenschaften nachteilig zu beeinflussen.

In einer besonders bevorzugten Ausgestaltung der Erfindung kann vorgesehen sein, dass die strahlungshärtbare Tinte ein Monomer in einer Menge von ≥ 25 Gew.-% bis ≤ 60 Gew.-%, besonders bevorzugt von ≥ 30 Gew.-% bis ≤ 50 Gew.-%, ein Oligomer in einer Menge von ≥ 5 Gew.-% bis ≤ 50 Gew.-%, vorzugsweise ≥ 8 Gew.-% bis ≤ 40 Gew.-%, besonders bevorzugt von ≥ 10 Gew.-% bis ≤ 20 Gew.-%, einen Photoinitiator in einer Menge von ≥ 1 Gew.-% bis ≤ 10 Gew.-%, vorzugsweise ≥ 3 Gew.-% bis ≤ 8 Gew.-%, besonders bevorzugt von ≥ 4 Gew.-% bis ≤ 6 Gew.-%, einen Stabilisator in einer Menge von ≥ 1 Gew.-% bis ≤ 3 Gew.-%, besonders bevorzugt von ≥ 1,5 Gew.-% bis ≤ 2,5 Gew.-%, ein Dispergiermittel in einer Menge von ≥ 1 Gew.-% bis ≤ 3 Gew.-%, besonders bevorzugt von ≥ 1,5 Gew.-% bis ≤ 2,5 Gew.-%, und einen Farbstoff in einer Menge von ≥ 1 Gew.-% bis ≤ 60 Gew.-%, vorzugsweise ≥ 10 Gew.-% bis ≤ 50 Gew.-%, besonders bevorzugt von ≥ 20 Gew.-% bis ≤ 40 Gew.-%, aufweist, bezogen auf die laminierbare Tinte, und das thermisch aktivierbare Matrixmaterial ein Makromer in einer Menge von ≥ 1 Gew.-% bis ≤ 10 Gew.-%, besonders bevorzugt von ≥ 2 Gew.-% bis ≤ 5 Gew.-% und optional ein Lösungsmittel in einer Menge von ≥ 0 Gew.-% bis ≤ 5 Gew.-%, vorzugsweise ≥ 1 Gew.-% bis ≤ 3 Gew.-%, besonders bevorzugt von ≥ 1,5 Gew.-% bis ≤ 2,5 Gew.-% aufweist, bezogen auf die laminierbare Tinte.

Dadurch kann vorteilhafter Weise erreicht werden, dass die laminierbare Tinte eine gute besonders gute Laminierbarkeit, Strahlungshärtbarkeit, Stabilität und Farbeigenschaften aufweist.

In einer bevorzugten Ausgestaltung der Erfindung kann vorgesehen sein, dass das Monomer ein Acrylatmonomer ist.

Dadurch kann vorteilhafter weise erreicht werden, dass die laminierbare Tinte besonders gut strahlungsgehärtet werden kann.

In einer bevorzugten Ausgestaltung der Erfindung kann vorgesehen sein, dass das Monomer ausgewählt ist aus der Gruppe bestehend aus monofunktionalen Monomeren, difunktionalen Monomeren, multifunktionalen Monomeren oder Mischungen davon.

Durch die verschiedenen Monomere lassen sich die Härtungseigenschaften der laminierbaren Tinte vorteilhafter weise einstellen. Insbesondere lässt sich dadurch beispielsweise das Molekulargewicht der gehärteten Tinte einstellen.

In einer bevorzugten Ausgestaltung der Erfindung kann vorgesehen sein, dass das Monomer ein monofunktionales Monomer aufweist, ausgewählt aus der Gruppe bestehend aus Isobornylacrylat, Glycidymethacrylat und Mischungen davon.

Durch die vorbeschriebenen monofunktionalen Monomere kann vorteilhafter Weise erreicht werden, dass die laminierbare Tinte besonders einfach härtbar ist.

In einer bevorzugten Ausgestaltung der Erfindung kann vorgesehen sein, dass das Monomer ein difunktionales Monomer aufweist, ausgewählt aus der Gruppe bestehend aus 1,3-Glyceroldimethacrylat, 1,10-Decandioldimethacrylat, Tricyclodecandimethanoldiacrylat, 1,9-Nonandioldimethacrylat und Mischungen davon.

Dadurch kann vorteilhafter Weise erreicht werden, dass das Monomer beim Härten zusätzliche Vernetzungen ausbildet, wodurch eine besonders gute Stabilität einer Dekorschicht erreicht werden kann.

In einer bevorzugten Ausgestaltung der Erfindung kann vorgesehen sein, dass das Monomer ein multifunktionales Monomer aufweist.

Dadurch kann auch vorteilhafter Weise erreicht werden, dass das Monomer beim Härten zusätzliche Vernetzungen ausbildet, wodurch eine besonders gute Stabilität einer Dekorschicht erreicht werden kann.

Das multifunktionale Monomer ist Trimethylolpropantriacrylat.

In einer alternativen besonders bevorzugten Ausgestaltung der Erfindung kann vorgesehen sein, dass das Monomer eine Mischung aus Isobornylacrylat und Glycidylmethacrylat ist.

Es konnte in überraschender Weise gezeigt werden, dass sich Trimethylolpropantriacrylat oder eine Mischung aus Isobornylacrylat und Glycidylmethacrylat besonders gut als Monomer eignet, da dadurch vorteilhafter Weise erreicht werden kann, dass die laminierbare Tinte besonders gut strahlungsgehärtet werden kann und gleichzeitig besonders gut laminierbar ist.

In einer besonders bevorzugten Ausgestaltung der Erfindung kann vorgesehen sein, dass die strahlungshärtbare Tinte Trimethylolpropantriacrylat in einer Menge von ≥ 20 Gew.-% bis ≤ 70 Gew.-%, vorzugsweise von ≥ 35 Gew.-% bis ≤ 50 Gew.-%, besonders bevorzugt von ≥ 40 Gew.-% bis ≤ 45 Gew.-% als Monomer aufweist, bezogen auf die laminierbare Tinte.

In einer alternativen besonders bevorzugten Ausgestaltung der Erfindung kann vorgesehen sein, dass die strahlungshärtbare Tinte eine Mischung aus Isobornylacrylat und Glycidylmethacrylat in einer Menge von ≥ 20 Gew.-% bis ≤ 70 Gew.-%, vorzugsweise von ≥ 25 Gew.-% bis ≤ 50 Gew.-%, besonders bevorzugt von ≥ 30 Gew.-% bis ≤ 40 Gew.-% als Monomer aufweist, bezogen auf die laminierbare Tinte.

Es konnte in überraschender Weise gezeigt werden, dass durch diese Mengen an Trimethylolpropantriacrylat oder einer Mischung aus Isobornylacrylat und Glycidylmethacrylat vorteilhafter Weise eine besonders gute Strahlungshärtung erreicht werden kann.

In einer bevorzugten Ausgestaltung der Erfindung kann vorgesehen sein, dass das Oligomer ein Acrylat-Cooligomer ist.

Dadurch kann vorteilhafter weise erreicht werden, dass die laminierbare Tinte besonders gut strahlungsgehärtet werden kann.

In einer bevorzugten Ausgestaltung der Erfindung kann vorgesehen sein, dass das Oligomer ausgewählt ist aus der Gruppe bestehend aus Acrylacrylat, Urethanacrylat, Melaminacrylat, Epoxyacrylat, Polyesteracrylat und Mischungen davon.

In einer besonders bevorzugten Ausgestaltung der Erfindung kann vorgesehen sein, dass das Oligomer Urethanacrylat ist.

In einer alternativen besonders bevorzugten Ausgestaltung der Erfindung kann vorgesehen sein, dass das Oligomer Melaminacrylat ist.

Es konnte in überraschender Weise gezeigt werden, dass sich Urethanacrylat oder Melaminacrylat besonders gut als Oligomer eignet, da dadurch vorteilhafter Weise erreicht werden kann, dass die laminierbare Tinte besonders gut strahlungsgehärtet werden kann und gleichzeitig besonders gut laminierbar ist.

In einer besonders bevorzugten Ausgestaltung der Erfindung kann vorgesehen sein, dass die strahlungshärtbare Tinte Urethanacrylat in einer Menge von ≥ 5 Gew.-% bis ≤ 50 Gew.-%, vorzugsweise ≥ 8 Gew.-% bis ≤ 20 Gew.-%, besonders bevorzugt von ≥ 10 Gew.-% bis ≤ 15 Gew.-%, als Oligomer aufweist, bezogen auf die laminierbare Tinte.

In einer alternativen besonders bevorzugten Ausgestaltung der Erfindung kann vorgesehen sein, dass die strahlungshärtbare Tinte Melaminacrylat in einer Menge von ≥ 5 Gew.-% bis ≤ 50 Gew.-%, vorzugsweise >_ 8 Gew.-% bis ≤ 20 Gew.-%, besonders bevorzugt von ≥ 10 Gew.-% bis ≤ 15 Gew.-%, als Oligomer aufweist, bezogen auf die laminierbare Tinte.

Es konnte in überraschender Weise gezeigt werden, dass durch diese Mengen an Urethanacrylat oder Melaminacrylat vorteilhafter Weise eine besonders gute Strahlungshärtung erreicht werden kann.

In einer bevorzugten Ausgestaltung der Erfindung kann vorgesehen sein, dass das Oligomer ein Molekulargewicht aufweist in einem Bereich von ≥ 500 g/mol bis ≤ 5000 g/mol.

In einer bevorzugten Ausgestaltung der Erfindung kann vorgesehen sein, dass der Photoinitiator ausgewählt ist aus der Gruppe bestehend aus Benzophenon, Alphaketon, Thiophenylmorpholinpropanon, Thioxanthon und Mischungen davon.

Dadurch kann vorteilhafter Weise erreicht werden, dass sich eine Härtung gut durch Strahlung eines entsprechenden Wellenlängenbereichs, beispielsweise durch UV-Strahlung, gut initiieren lässt.

In einer besonders bevorzugten Ausgestaltung der Erfindung kann vorgesehen sein, dass der Photoinitiator Alphaketon ist.

In einer alternativen besonders bevorzugten Ausgestaltung der Erfindung kann vorgesehen sein, dass der Photoinitiator Thiophenylmorpholinopropanon ist.

In einer besonders bevorzugten Ausgestaltung der Erfindung kann vorgesehen sein, dass die strahlungshärtbare Tinte Alphaketon in einer Menge von ≥ 1 Gew.-% bis ≤ 10 Gew.-%, vorzugsweise ≥ 3 Gew.-% bis ≤ 8 Gew.-%, besonders bevorzugt von ≥ 4 Gew.-% bis ≤ 6 Gew.-%, als Photoinitiator aufweist, bezogen auf die laminierbare Tinte.

In einer alternativen besonders bevorzugten Ausgestaltung der Erfindung kann vorgesehen sein, dass die strahlungshärtbare Tinte Thiophenylmorpholinopropanon in einer Menge von ≥ 1 Gew.-% bis ≤ 10 Gew.-%, vorzugsweise ≥ 3 Gew.-% bis ≤ 8 Gew.-%, besonders bevorzugt von ≥ 4 Gew.-% bis ≤ 5 Gew.-%, als Photoinitiator aufweist, bezogen auf die laminierbare Tinte.

In einer bevorzugten Ausgestaltung der Erfindung kann vorgesehen sein, dass das Dispergiermittel ausgewählt ist aus der Gruppe bestehend aus Efka 4000, Efka 5000, Efka 6000, Dispex, ultradisperse, RAD-SPERSE und Mischungen davon.

Dadurch kann vorteilhafter Weise erreicht werden, dass die Farbe der laminierbaren Tinte gleichmäßig ist, ohne die Laminierbarkeit oder Strahlungshärtbarkeit negativ zu beeinflussen.

In einer besonders bevorzugten Ausgestaltung der Erfindung kann vorgesehen sein, dass die die strahlungshärtbare Tinte RAD-SPERSE in einer Menge von ≥ 0 Gew.-% bis ≤ 5 Gew.-%, vorzugsweise ≥ 1 Gew.-% bis ≤ 3 Gew.-%, besonders bevorzugt von ≥ 1,5 Gew.-% bis ≤ 2,5 Gew.-%, als Dispergiermittel aufweist, bezogen auf die laminierbare Tinte.

In einer bevorzugten Ausgestaltung der Erfindung kann vorgesehen sein, dass der Stabilisator ausgewählt ist aus der Gruppe bestehend aus 2-Hydroxy-4-octyloxybenzophenon, 2-(2-Hydroxy-5-methylphenyl) benzotriazol, 2,2-Dihydroxy-4,4-dimethoxybenzophenon und Mischungen davon.

Dadurch kann vorteilhafter Weise erreicht werden, dass die laminierbare Tinte hitzestabil ist.

In einer besonders bevorzugten Ausgestaltung der Erfindung kann vorgesehen sein, dass die strahlungshärtbare Tinte 2-Hydroxy-4-octyloxybenzophenon in einer Menge von ≥ 0 Gew.-% bis ≤ 5 Gew.-%, vorzugsweise ≥ 1 Gew.-% bis ≤ 3 Gew.-%, besonders bevorzugt von ≥ 1,5 Gew.-% bis ≤ 2,5 Gew.-%, als Dispergiermittel aufweist, bezogen auf die laminierbare Tinte.

Dadurch kann vorteilhafter weise erreicht werden, dass die laminierbare Tinte hitzestabil ist und die Strahlungshärtbarkeit und Laminierbarkeit der Tinte nicht beeinträchtigt wird.

Gemäß einer weiteren Ausgestaltung der Erfindung kann es vorgesehen sein, dass die laminierbare Tinte einen Inhibitor aufweist. Vorzugsweise kann dieser Inhibitor in einer Menge von ≥ 0 Gew.-% bis ≤ 2 Gew.-%, vorzugsweise ≥ 0,005 Gew.-% bis ≤ 1 Gew.-%, besonders bevorzugt von ≥ 0,01 Gew.-% bis ≤ 0,1 Gew.-% in der laminierbaren Tinte enthalten sein.

Gemäß einer weiteren Ausgestaltung der Erfindung kann der Inhibitor mindestens eine Verbindung sein, welche ausgewählt ist aus einer Gruppe bestehend Hydrochinon, Methoxymethylhydrochinon, p-Benzochinon, p-Methoxychinon, Phenothiazin, Mono-tert.-butylhydrochinon, 1,2-Dihydroxybenzol, p-Tertbutylbrenzcatechin, Benzochinon, 2,5-Di-tert.-butylhydrochinon, 2,5-p-dimethyl-p-bezochinon, Anthrachinon, 2,6 Di-tert.-butylhydroxytoluol, und organischen Phosphiten.

Das Vorsehen entsprechender Inhibitor kann vorteilhafterweise eine exotherme Zersetzung der laminierbaren Tinte verringern sowie zur Steuerung der photoinitiierten Polymerisation dienen.

In einer bevorzugten Ausgestaltung der Erfindung kann vorgesehen sein, dass der Farbstoff ein organisches und/oder anorganisches Pigment ist.

In einer bevorzugten Ausgestaltung der Erfindung kann vorgesehen sein, dass der Farbstoff ausgewählt ist aus der Gruppe, bezeichnet nach dem Colour Index, bestehend aus NB1, NB2, PB1, PB1:2, PB15:1, NBr3, NBr7, NBr9, PBr1, NY2, NY3, NY6, NY10, NY11, NY12, NY13, NY14, PY1, PY2, PY3, PY4, PY5, PY6, NG1, NG2, PG1, PG2, PG4, PG13, NO2, NO4, NO5, NO6, PO17, PO20, NR1, NR2, NR11, NR23, NV1, PV1, PV1:1, PV1:3, PV3:3, NBK3, NBK6, NBK9, PBK11 und Mischungen davon.

Dadurch kann vorteilhafter Weise die Farbe des Farbstoffes wie gewünscht beliebig eingestellt werden, ohne dass insbesondere die Strahlungshärtbarkeit und Laminierbarkeit beeinträchtigt wird.

In einer bevorzugten Ausgestaltung der Erfindung kann vorgesehen sein, dass der Farbstoff eine mittlere Partikelgröße von kleiner oder gleich 200 nm aufweist, vorzugsweise von kleiner oder gleich 100 nm.

Unter der mittleren Partikelgröße ist im Sinne der vorliegenden Erfindung der volumetrisch gemittelte mittlere Partikeldurchmesser D₅₀, gemessen mittels Laserdiffraktometrie, zu verstehen.

Dadurch kann vorteilhafter Weise erreicht werden, dass die Tinte eine gleichmäßige Farbe aufweist und gut mit Tintenstrahldruckern gedruckt werden kann. Insbesondere kann dadurch ein Verstopfen der Druckdüsen verhindert werden.

In einer bevorzugten Ausgestaltung der Erfindung kann vorgesehen sein, dass das Polymer ein UV-stabiles Polymer ist.

Dadurch kann erreicht werden, dass das thermisch aktivierbare Matrixmaterial bei einem Strahlungshärten mittels UV-Strahlung nicht beeinträchtigt wird.

In einer bevorzugten Ausgestaltung der Erfindung kann vorgesehen sein, dass das Polymer ausgewählt ist aus der Gruppe bestehend aus Polymethylmethacrylat, Copolyacrylat, thermoplastischem Polyurethan, Copolyamid, Copolyester, flüssigem Polybutadien, kolophoniummodifiziertem Polyisobuten und Mischungen davon.

Es konnte in überraschender Weise gezeigt werden, dass sich diese Polymere besonders gut als Polymer eignen.

In einer bevorzugten Ausgestaltung der Erfindung kann vorgesehen sein, dass das Polymer ein Zahlenmittel des Molekulargewichts aufweist in einem Bereich von ≥ 700 g/mol bis ≤ 20000 g/mol.

In einer bevorzugten Ausgestaltung der Erfindung kann vorgesehen sein, dass das Polymer Polymethylmethacrylat mit einem Zahlenmittel des Molekulargewichts in einem Bereich von ≥ 700 g/mol bis ≤ 15000 g/mol aufweist.

In einer bevorzugten Ausgestaltung der Erfindung kann vorgesehen sein, dass das Polymer thermoplastisches Polyurethan mit einem Zahlenmittel des Molekulargewichts in einem Bereich von ≥ 1500 g/mol bis ≤ 20000 g/mol aufweist.

In einer bevorzugten Ausgestaltung der Erfindung kann vorgesehen sein, dass das Polymer Copolyamid mit einem Zahlenmittel des Molekulargewichts in einem Bereich von ≥ 2000 g/mol bis ≤ 18000 g/mol aufweist.

In einer bevorzugten Ausgestaltung der Erfindung kann vorgesehen sein, dass das Polymer Copolyester mit einem Zahlenmittel des Molekulargewichts in einem Bereich von ≥ 3000 g/mol bis ≤ 20000 g/mol aufweist.

In einer bevorzugten Ausgestaltung der Erfindung kann vorgesehen sein, dass das Polymer flüssiges Polybutadien mit einem Zahlenmittel des Molekulargewichts in einem Bereich von ≥ 1000 g/mol bis ≤ 3000 g/mol aufweist.

Durch die vorbeschriebenen Polymere kann vorteilhafter Weise erreicht werden, dass das Matrixmaterial bei einem Laminieren aktiviert wird und die Dekorschicht mit einer auflaminierten Deckschicht einen stabilen Verbund mit guter Verbundfestigkeit bildet. Insbesondere kann durch die vorbeschriebenen Polymere erreicht werden, dass die physikalischen Eigenschaften der laminierbaren Tinte nicht zu stark beeinträchtigt werden, so dass eine gute Druckbarkeit erhalten bleibt und auch eine gute Strahlungshärtbarkeit.

In einer bevorzugten Ausgestaltung der Erfindung kann vorgesehen sein, dass das Polymer eine mittlere Partikelgröße von kleiner oder gleich 500 µm, vorzugsweise von kleiner oder gleich 80 µm, besonders bevorzugt von kleiner oder gleich 1 µm, aufweist.

Dadurch kann vorteilhafter Weise erreicht werden, dass das Polymer in der laminierbaren Tinte gut verteilt vorliegen kann, so dass die Laminierbarkeit über einen gesamten Druckbereich gleichbleibend gut ist.

In einer bevorzugten Ausgestaltung der Erfindung kann vorgesehen sein, dass das Polymer Polymethylmethacrylat mit einer mittleren Partikelgröße von kleiner oder gleich 150 µm aufweist.

In einer bevorzugten Ausgestaltung der Erfindung kann vorgesehen sein, dass das Polymer thermoplastisches Polyurethan mit einer mittleren Partikelgröße von kleiner oder gleich 170 µm aufweist, insbesondere kleiner oder gleich 2 µm.

In einer bevorzugten Ausgestaltung der Erfindung kann vorgesehen sein, dass das Polymer Copolyester und/oder Copolyamid mit einer mittleren Partikelgröße von kleiner oder gleich 400 µm aufweist, insbesondere kleiner oder gleich 1 µm.

Es konnte in überraschender Weise gezeigt werden, dass sich die vorbeschriebenen Bereiche für die spezifischen Polymere besonders gut eignen.

In einer bevorzugten Ausgestaltung der Erfindung kann vorgesehen sein, dass Polymer Polymethylmethacrylat mit einem Schmelzbereich in einem Bereich von ≥ 170 °C bis ≤ 210 °C aufweist.

In einer bevorzugten Ausgestaltung der Erfindung kann vorgesehen sein, dass das Polymer thermoplastisches Polyurethan mit einem Schmelzbereich in einem Bereich von ≥ 105 °C bis ≤ 132 °C aufweist.

In einer bevorzugten Ausgestaltung der Erfindung kann vorgesehen sein, dass das Polymer Copolyamid mit einem Schmelzbereich in einem Bereich von ≥ 118 °C bis ≤ 128 °C aufweist.

In einer bevorzugten Ausgestaltung der Erfindung kann vorgesehen sein, dass das Polymer Copolyester mit einem Schmelzbereich in einem Bereich von ≥ 110 °C bis ≤ 120 °C aufweist.

In einer bevorzugten Ausgestaltung der Erfindung kann vorgesehen sein, dass das Polymer ein Copolyacrylat und/oder ein flüssiges Polybutadien ist.

In einer besonders bevorzugten Ausgestaltung der Erfindung kann vorgesehen sein, dass das Polymer ein Copolyacrylat ist, mit einer Viskosität in einem Bereich von größer oder gleich 300 mPa s bis kleiner oder gleich 500 mPa s, gemessen nach EN ISO 3219.

In einer besonders bevorzugten Ausgestaltung der Erfindung kann vorgesehen sein, dass das Polymer ein flüssiges Polybutadien ist, mit einer Viskosität in einem Bereich von größer oder gleich 200 mPa s bis kleiner oder gleich 450 mPa s, gemessen nach EN ISO 3219.

Dadurch kann vorteilhafter Weise erreicht werden, dass das entsprechende Polymer eine gute thermische Aktivierbarkeit des Matrixmaterials erzeugt und gleichzeitig eine Viskosität aufweist, die eine gute Druckbarkeit der laminierbaren Tinte erlaubt.

In einer bevorzugten Ausgestaltung kann vorgesehen sein, dass das Polymer in einem Temperaturbereich von größer oder gleich 100 °C bis kleiner oder gleich 130 °C laminierbar ist.

In einer bevorzugten Ausgestaltung der Erfindung kann vorgesehen sein, dass das Polymer ausgewählt ist aus Klebrigmachern, auch Tackifier genannt. Beispielsweise kann das Polymer bevorzugt ein Kolophoniumesterharz sein, insbesondere ein kolophoniumestermodifiziertes Polyisobuten.

In einer besonders bevorzugten Ausgestaltung der Erfindung kann vorgesehen sein, dass das Matrixmaterial Polymethylmethacrylat mit einem Zahlenmittel des Molekulargewichts in einem Bereich von ≥ 700 g/mol bis ≤ 15000 g/mol und einem Schmelzbereich in einem Bereich von ≥ 170 °C bis ≤ 210 °C aufweist.

In einer bevorzugten Ausgestaltung der Erfindung kann vorgesehen sein, dass das Matrixmaterial thermoplastisches Polyurethan mit einem Zahlenmittel des Molekulargewichts in einem Bereich von ≥ 1500 g/mol bis ≤ 20000 g/mol und einem Schmelzbereich in einem Bereich von ≥ 105 °C bis ≤ 132 °C aufweist.

In einer bevorzugten Ausgestaltung der Erfindung kann vorgesehen sein, dass das Makromer ausgewählt ist aus der Gruppe bestehend aus Polyoxyethylenchlorotriazin, Polyoxypropylenchlorotriazin, Polyethylenglycol, Polyether, Polystyrolbutlyacrylat und Mischungen davon.

In einer bevorzugten Ausgestaltung der Erfindung kann vorgesehen sein, dass das Makromer ein Molekulargewicht aufweist in einem Bereich von ≥ 150 g/mol bis ≤ 400 g/mol.

In einer bevorzugten Ausgestaltung der Erfindung kann vorgesehen sein, dass das Makromer Polyethylenglycol ist.

In einer alternativen bevorzugten Ausgestaltung der Erfindung kann vorgesehen sein, dass das Makromer Polyether ist.

In einer besonders bevorzugten Ausgestaltung der Erfindung kann vorgesehen sein, dass das Makromer Polyethylenglycol ist und das Polymer thermoplastisches Polyurethan ist.

In einer alternativen besonders bevorzugten Ausgestaltung der Erfindung kann vorgesehen sein, dass das Makromer Polyether ist und das Polymer Polymethylenmethacrylat ist.

In einer alternativen Ausgestaltung der Erfindung kann vorgesehen sein, dass das Matrixmaterial kein Makromer aufweist und das Polymer flüssiges Polybutadien ist.

Durch die vorbeschriebenen Ausgestaltungen lässt sich vorteilhafter Weise erreichen, dass die laminierbare Tinte einen besonders starken Verbund mit einer Deckschicht ausbilden kann.

In einer bevorzugten Ausgestaltung der Erfindung kann vorgesehen sein, dass das Lösungsmittel ausgewählt ist aus der Gruppe bestehend aus Cyclohexanon, Butanon, Methylethylketon, Xylol, Ethylacetat, Ethyllactat, Dimethylsulfoxid, Dimethylformamid, Ameisensäure und Mischungen davon.

Dadurch kann vorteilhafter Weise erreicht werden, das das Polymer besonders gut in der laminierbaren Tinte dispergiert wird oder sogar gelöst wird. Dadurch kann eine besonders homogene Verteilung des Polymers erreicht werden.

Mit der Erfindung wird ferner die Verwendung einer vorbeschriebenen laminierbaren Tinte zur Herstellung einer Dekorschicht vorgeschlagen.

In einer Ausgestaltung der Erfindung wird die laminierbare Tinte zur Herstellung einer laminierten Dekorschicht eines Dekorpaneels verwendet.

Durch die erfindungsgemäße Verwendung kann erreicht werden, dass Oberflächen mit einem Dekor versehen werden können und direkt auf das Dekor eine Schutzschicht aufgebracht werden kann.

Mit der Erfindung wird ferner ein Dekorpaneel aufweisend eine Dekorschicht mit einem Dekor hergestellt aus einer vorbeschriebenen laminierbaren Tinte vorgeschlagen.

Durch die erfindungsgemäßen Dekorpaneele lassen sich besonders gut detaillierte Dekoroberflächen realisieren, wobei die Dekoroberflächen durch zumindest eine Schutzschicht geschützt sein kann.

Mit der Erfindung wird ferner ein Verfahren zur Herstellung eines Dekorpaneels aufweisend eine Dekorschicht mit einem Dekor hergestellt aus einer vorbeschriebenen laminierbaren Tinte vorgeschlagen.

Das Verfahren weist dabei zumindest die Verfahrensschritte auf:
a. Bereitstellen eines plattenförmigen Trägers,
b. Drucken eines Dekors mit einer vorbeschriebenen laminierbaren Tinte auf zumindest einen Teil des plattenförmigen Trägers,
c. Härten des Dekors mit elektromagnetischer Strahlung, vorzugsweise mit UV-Strahlung,
d. Laminieren zumindest eines Teilbereichs des Dekors mit einer Verschleiß- und/oder Deckschicht,
wobei beim Laminieren des Dekors die gehärtete Tinte thermisch aktiviert wird und mit dem Laminat einen Verbund ausbildet.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Holzwerkstoffe im Sinne der Erfindung sind dabei neben Vollholzwerkstoffen auch Materialien wie z.B. Brettsperrholz, Brettschichtholz, Stabsperrholz, Furniersperrholz, Furnierschichtholz, Furnierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Kunststoffe, welche bei der Herstellung entsprechender Paneele beziehungsweise der Träger eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Talk, Flugasche, Gips. Auch können sie in bekannter Weise eingefärbt sein.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein Mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Unter Laminieren ist im Sinne der vorliegenden Erfindung ein stoffschlüssiges Verbinden von zwei Schichten durch Druck- und/oder Temperatureinwirkung zu verstehen.

Unter thermisch aktivieren ist im Sinne der vorliegenden Erfindung auch ein zweites, thermisches Härten zu verstehen.

In einer Ausgestaltung der Erfindung kann vorgesehen sein, dass auf den plattenförmigen Träger zwischen Schritt a) und b) ein Druckuntergrund aufgebracht wird.

Unter einem Druckuntergrund ist im Sinne der vorliegenden Erfindung eine Schicht zu verstehen, die eine verbesserte Haftung der Tinte auf dem plattenförmigen Träger erlaubt.

Das Drucken des Dekors mit der vorbeschriebenen laminierbaren Tinte auf den plattenförmigen Träger, kann dabei nach einem üblichen Verfahren realisiert werden. Beispielsweise kann vorgesehen sein, dass das Dekor mit der laminierbare Tinte in einem Flexo-Druck, Offset-Druck oder Siebdruckverfahren hergestellt wird. Bevorzugt kann vorgesehen sein, dass das Dekor mit der laminierbaren Tinte mit einer Digitaldrucktechnik, wie insbesondere mit einem Inkjet-Verfahren hergestellt wird.

Dadurch kann erreicht werden, dass besonders individuelle Dekore herstellbar sind.

In einer bevorzugten Ausgestaltung der Erfindung kann vorgesehen sein, dass das Dekor aus einer Mehrzahl verschiedenfarbiger vorbeschriebener laminierbaren Tinten hergestellt wird.

Dadurch können insbesondere mehrfarbige Dekore hergestellt werden.

In einer Ausgestaltung der Erfindung kann vorgesehen sein, dass das Härten des Dekors mit elektromagnetischer Strahlung, vorzugsweise mit UV-Strahlung, realisiert wird.

Unter UV-Strahlung kann dabei insbesondere eine Strahlung verstanden werden, die in einem Wellenlängenbereich von beispielsweise 10-450nm, etwa 100-380nm liegt.

Dadurch kann vorteilhafter Weise erreicht werden, dass die laminierbare Tinte gehärtet wird, ohne die thermische Reaktivierbarkeit der Matrix zu beeinträchtigen.

Dabei kann derartige Strahlung beispielsweise erzeugbar sein in an sich bekannter Weise durch das Verwenden von Mitteldruckstrahlern. Beispielhaft kann eine Gasentladungslampe, wie etwa eine Quecksilberdampflampe, verwendet werden.

In einer Ausgestaltung der Erfindung kann vorgesehen sein, dass die Verschleiß- und/oder Deckschicht ein Lack, ein Harz oder eine Folie ist.

In einer Ausgestaltung der Erfindung kann die die Deckschicht beispielsweise eine flüssige, lackhaltige Deckschicht sein, die zumindest teilweise thermisch gehärtet wird, wobei sich die gehärtete Tinte thermisch aktivieren kann und sich mit der gehärteten Deckschicht verbindet.

In einer Ausgestaltung der Erfindung kann vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird, wobei sich die gehärtete Tinte thermisch aktivieren kann und sich mit der Verschleiß- und/oder Deckschicht verbindet.

Ferner kann es bevorzugt sein, dass zur Ausbildung der Verschleiß- und/oder Deckschicht eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

In einer bevorzugten Ausgestaltung der Erfindung kann vorgesehen sein, dass die gehärtete Tinte beim Laminieren mit einer Temperatur in einem Bereich von größer oder gleich 100 °C bis kleiner oder gleich 150 °C thermisch aktiviert wird.

In einer besonders bevorzugten Ausgestaltung der Erfindung kann vorgesehen sein, dass die laminierbare Tinte Polymethylmethacrylat als Polymer aufweist und die gehärtete Tinte mit einer Temperatur in einem Bereich von größer oder gleich 130 °C bis kleiner oder gleich 140 °C thermisch aktiviert wird.

In einer besonders bevorzugten Ausgestaltung der Erfindung kann vorgesehen sein, dass die laminierbare Tinte thermoplastisches Polyurethan als Polymer aufweist und die gehärtete Tinte mit einer Temperatur in einem Bereich von größer oder gleich 100 °C bis kleiner oder gleich 120 °C thermisch aktiviert wird.

In einer besonders bevorzugten Ausgestaltung der Erfindung kann vorgesehen sein, dass die laminierbare Tinte Copolyamid als Polymer aufweist und die gehärtete Tinte mit einer Temperatur in einem Bereich von größer oder gleich 125 °C bis kleiner oder gleich 145 °C thermisch aktiviert wird.

In einer besonders bevorzugten Ausgestaltung der Erfindung kann vorgesehen sein, dass die laminierbare Tinte Copolyester als Polymer aufweist und die gehärtete Tinte mit einer Temperatur in einem Bereich von größer oder gleich 105 °C bis kleiner oder gleich 115 °C thermisch aktiviert wird.

In einer besonders bevorzugten Ausgestaltung der Erfindung kann vorgesehen sein, dass die laminierbare Tinte flüssiges Polybutadien als Polymer aufweist und die gehärtete Tinte mit einer Temperatur in einem Bereich von größer oder gleich 110 °C bis kleiner oder gleich 130 °C thermisch aktiviert wird.

In einer besonders bevorzugten Ausgestaltung der Erfindung kann vorgesehen sein, dass die laminierbare Tinte kolophoniummodifiziertes Polyisobuten als Polymer aufweist und die gehärtete Tinte mit einer Temperatur in einem Bereich von größer oder gleich 100 °C bis kleiner oder gleich 120 °C thermisch aktiviert wird.

Durch die vorbeschriebenen Temperaturbereiche kann erreicht werden, dass die gehärteten Tinten besonders gut thermisch aktiviert werden.

In einer bevorzugten Ausgestaltung der Erfindung kann vorgesehen sein, dass die Dekorschicht und die Verschleiß- und/oder Deckschicht mit einem Druck in einem Bereich von größer oder gleich 2 bar bis 70 bar, vorzugsweise größer oder gleich 10 bar bis 50 bar beim Laminieren miteinander verpresst werden.

In einer besonders bevorzugten Ausgestaltung der Erfindung kann vorgesehen sein, dass die laminierbare Tinte Polymethylmethacrylat als Polymer aufweist und die Dekorschicht und die Verschleiß- und/oder Deckschicht mit einem Druck in einem Bereich von größer oder gleich 5 bar bis 70 bar, vorzugsweise größer oder gleich 15 bar bis 60 bar beim Laminieren miteinander verpresst werden.

In einer besonders bevorzugten Ausgestaltung der Erfindung kann vorgesehen sein, dass die laminierbare Tinte thermoplastisches Polyurethan als Polymer aufweist und die Dekorschicht und die Verschleiß- und/oder Deckschicht mit einem Druck in einem Bereich von größer oder gleich 2 bar bis 55 bar, vorzugsweise größer oder gleich 8 bar bis 50 bar beim Laminieren miteinander verpresst werden.

In einer besonders bevorzugten Ausgestaltung der Erfindung kann vorgesehen sein, dass die laminierbare Tinte Copolyamid als Polymer aufweist und die Dekorschicht und die Verschleiß- und/oder Deckschicht mit einem Druck in einem Bereich von größer oder gleich 2 bar bis 70 bar, vorzugsweise größer oder gleich 7 bar bis 65 bar beim Laminieren miteinander verpresst werden.

In einer besonders bevorzugten Ausgestaltung der Erfindung kann vorgesehen sein, dass die laminierbare Tinte Copolyester als Polymer aufweist und die Dekorschicht und die Verschleiß- und/oder Deckschicht mit einem Druck in einem Bereich von größer oder gleich 3 bar bis 70 bar, vorzugsweise größer oder gleich 4 bar bis 63 bar beim Laminieren miteinander verpresst werden.

In einer besonders bevorzugten Ausgestaltung der Erfindung kann vorgesehen sein, dass die laminierbare Tinte flüssiges Polybutadien als Polymer aufweist und die Dekorschicht und die Verschleiß- und/oder Deckschicht mit einem Druck in einem Bereich von größer oder gleich 4 bar bis 70 bar, vorzugsweise größer oder gleich 5 bar bis 55 bar beim Laminieren miteinander verpresst werden.

In einer besonders bevorzugten Ausgestaltung der Erfindung kann vorgesehen sein, dass die laminierbare Tinte kolophoniummodifiziertes Polyisobuten als Polymer aufweist und die Dekorschicht und die Verschleiß- und/oder Deckschicht mit einem Druck in einem Bereich von größer oder gleich 2 bar bis 70 bar, vorzugsweise größer oder gleich 5 bar bis 45 bar beim Laminieren miteinander verpresst werden.

In einer besonders bevorzugten Ausgestaltung der Erfindung kann vorgesehen sein, dass die laminierbare Tinte flüssiges Polybutadien und kolophoniummodifiziertes Polyisobuten als Polymer aufweist und die Dekorschicht und die Verschleiß- und/oder Deckschicht mit einem Druck in einem Bereich von größer oder gleich 4 bar bis 70 bar, vorzugsweise größer oder gleich 5 bar bis 55 bar beim Laminieren miteinander verpresst werden.

Durch die vorbeschriebenen Druckbereiche kann erreicht werden, dass die Dekorschicht und die Verschließ- und/oder Deckschicht eine besonders große Verbundfestigkeit aufweisen.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Des Weiteren kann es vorgesehen sein, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalze oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Darüber hinaus kann auf der der Dekorseite gegenüberliegenden Seite ein Gegenzug aufgebracht werden.

Die Erfindung ist nachfolgend anhand der Beispiele weiter erläutert. Die Beispiele zeigen mögliche Ausgestaltungen der Erfindung. Prinzipiell sind jedoch auch Kombinationen oder Abwandlungen der Ausgestaltungen im Rahmen der Erfindung möglich.

In den nachfolgenden Tabellen sind Beispiele für Zusammensetzungen von erfindungsgemäßen laminierbaren Tinten angegeben. Unter Gew.-% ist dabei der Massenanteil bezogen auf die laminierbare Tinte zu verstehen.

Die laminierbare Tinte nach Beispiel 1 wies dabei eine violette Farbe auf und ließ sich besonders gut mit UV-Strahlung härten, nachdem sie in einem Inkjet-Druckverfahren auf einen Träger aufgebracht wurde.

Die erhaltene Dekorschicht wurde mit einer Verschleißschutzschicht in einer Presse bei 110°C und mit einem Druck von 10 bar laminiert. Dabei bildete sich ein stabiler Verbund, ohne dass zwischen die Dekorschicht und die Verschleißschutzschicht ein Klebstoff aufgebracht werden musste.

| Beispiel 1 | |
|---|---|
| Material | Gew.-% |
| Isobornylacrylat, Glycidylmethacrylat | 30-35% |
| Urethanacrylate | 10-15% |
| Polyethelenglycol | 5% |
| Flüssiges Polybutadien | 5-10% |
| Thiophenylmorpholinopropanon | 5% |
| RAD-SPERSE | 2% |
| 2-Hydroxy-4-octyloxybenzophenon | 2% |
| PV3:3 | 30-35% |
| Kolophoniumestermodifiziertes Polyisobuten | 2-5% |

Die laminierbare Tinte nach Beispiel 2 wies eine braune Farbe auf und ließ sich besonders gut mit UV-Strahlung härten nachdem sie in einem Inkjet-Druckverfahren auf einen Träger aufgebracht wurde. Die erhaltene Dekorschicht wurde ebenfalls mit einer Verschleißschutzschicht in einer Presse bei 110°C und mit einem Druck von 2,5 bar laminiert. Dabei bildete sich auch ein stabiler Verbund, ohne dass zwischen die Dekorschicht und die Verschleißschutzschicht ein Klebstoff aufgebracht werden musste.

| Beispiel 2 | |
|---|---|
| Material | Gew.-% |
| Trimethylolpropantriacrylate | 37-45% |
| Melaminacrylate | 10% |
| Polyethelenglycol | 5% |
| Thermoplastisches Polyurethan | 15% |
| Alphaketon | 4% |
| RAD-SPERSE | 2% |
| 2-Hydroxy-4-octyloxybenzophenon | 2% |
| NBr3 | 17-25% |

Die laminierbare Tinte nach Beispiel 3 wies eine grüne Farbe auf und ließ sich ebenfalls besonders gut mit UV-Strahlung härten nachdem sie in einem Inkjet-Druckverfahren auf einen Träger aufgebracht wurde. Die erhaltene Dekorschicht wurde mit einer Verschleißschutzschicht in einer Presse bei 135 °C und mit einem Druck von 8 bar laminiert. Dabei bildete sich auch ein stabiler Verbund, ohne dass zwischen die Dekorschicht und die Verschleißschutzschicht ein Klebstoff aufgebracht werden musste.

| Beispiel 3 | |
|---|---|
| Material | Gew.-% |
| Isobornylacrylat, Glycidylmethacrylat | 36-41% |
| Urethanacrylate | 15% |
| Polyether | 5% |
| Copolyacrylat | 10% |
| Thiophenylmorpholinopropanon | 5% |
| RAD-SPERSE | 2% |
| 2-Hydroxy-4-octyloxybenzophenon | 2% |
| PG4 | 20-25% |

Die laminierbare Tinte nach Beispiel 4 wies eine gelbe Farbe auf und ließ sich ebenfalls besonders gut mit UV-Strahlung härten nachdem sie in einem Inkjet-Druckverfahren auf einen Träger aufgebracht wurde. Die erhaltene Dekorschicht wurde mit einer Verschleißschutzschicht in einer Presse bei 130°C und mit einem Druck von 5 bar laminiert. Dabei bildete sich auch ein stabiler Verbund, ohne dass zwischen die Dekorschicht und die Verschleißschutzschicht ein Klebstoff aufgebracht werden musste.

| Beispiel 4 | |
|---|---|
| Material | Gew.-% |
| Isobornylacrylat, Glycidylmethacrylat | 30% |
| Urethanacrylat | 15% |
| Flüssiges Polybutadien | 11-20% |
| Alphaketon | 5% |
| RAD-SPERSE | 2% |
| 2-Hydroxy-4-octyloxybenzophenon | 2% |
| NY11 | 26-35% |

## Patentansprüche

1. Laminierbare Tinte, aufweisend
eine strahlungshärtbare Tinte in einer Menge, bezogen auf die laminierbare Tinte, von ≥ 50 Gew.-% bis ≤ 99 Gew.-% und
ein thermisch aktivierbares Matrixmaterial in einer Menge, bezogen auf die laminierbare Tinte, von ≥ 1 Gew.-% bis ≤ 50 Gew.-%,
wobei das Matrixmaterial zumindest ein thermisch aktivierbares Polymer aufweist in einer Menge, bezogen auf die laminierbare Tinte, von ≥ 1 Gew.-% bis ≤ 30 Gew.-%, wobei die strahlungshärtbare Tinte ein Monomer, ein Oligomer, einen Photoinitiator, einen Stabilisator, einen Inhibitor, ein Dispergiermittel und/oder einen Farbstoff aufweist, wobei die strahlungshärtbare Tinte ein Monomer in einer Menge von ≥ 25 Gew.-% bis ≤ 60 Gew.-%, ein Oligomer in einer Menge von ≥ 5 Gew.-% bis ≤ 50 Gew.-%, einen Photoinitiator in einer Menge von ≥ 1 Gew.-% bis ≤ 10 Gew.-%, einen Stabilisator in einer Menge von ≥ 1 Gew.-% bis ≤ 3 Gew.-%, ein Dispergiermittel in einer Menge von ≥ 1 Gew.-% bis ≤ 3 Gew.-%, und einen Farbstoff in einer Menge von ≥ 1 Gew.-% bis ≤ 60 Gew.-% aufweist, bezogen auf die laminierbare Tinte, und das thermisch aktivierbare Matrixmaterial ein Makromer in einer Menge von ≥ 1 Gew.-% bis ≤ 10 Gew.-% und optional ein Lösungsmittel in einer Menge von ≥ 0 Gew.-% bis ≤ 5 Gew.-% aufweist, bezogen auf die laminierbare Tinte,
**dadurch gekennzeichnet, dass** das Monomer ein monofunktionales Monomer aufweist, ausgewählt aus der Gruppe bestehend aus Isobornylacrylat, Glycidylmethacrylat und Mischungen davon und/oder das Monomer ein difunktionales Monomer aufweist, ausgewählt aus der Gruppe bestehend aus 1,3-Glyceroldimethacrylat, 1,10-Decandioldimethacrylat, Tricyclodecandimeth-anoldiacrylat, 1,9-Nonandioldimethacrylat und Mischungen davon und/oder das Monomer ein Trimethylolpropantrimethacrylat ist.

2. Laminierbare Tinte nach Anspruch 1, wobei das Oligomer ausgewählt ist aus der Gruppe bestehend aus Acrylacrylat, Urethanacrylat, Melaminacrylat, Epoxyacrylat, Polyesteracrylat und Mischungen davon.

3. Laminierbare Tinte nach einem der Ansprüche 1 und 2, wobei der Photoinitiator ausgewählt ist aus der Gruppe bestehend aus Benzophenon, Alphaketon, Thiophenylmorpholinpropanon, Thioxanthon und Mischungen davon.

4. Laminierbare Tinte nach einem der vorherigen Ansprüche, wobei das Polymer ausgewählt ist aus der Gruppe bestehend aus Polymethylmethacrylat, Copolyacrylat, thermoplastischem Polyurethan, Copolyamid, Copolyester, flüssigem Polybutadien, kolophoniummodifiziertem Polyisobuten und Mischungen davon.

5. Laminierbare Tinte nach einem der vorherigen Ansprüche, wobei das Polymer ein Zahlenmittel des Molekulargewichts aufweist in einem Bereich von ≥ 700 g/mol bis ≤ 20000 g/mol.

6. Laminierbare Tinte nach einem der Ansprüche 1 bis 5, wobei das Makromer ausgewählt ist aus der Gruppe bestehend aus Polyoxyethylenchlorotriazin, Polyoxypropylenchlorotriazin, Polyethylenglycol, Polyether, Polystyrolbutlyacrylat und Mischungen davon.

7. Laminierbare Tinte nach einem der Ansprüche 1 bis 6, wobei das Lösungsmittel ausgewählt ist aus der Gruppe bestehend aus Cyclohexanon, Butanon, Methylethylketon, Xylol, Ethylacetat, Ethyllactat, Dimethylsulfoxid, Dimethylformamid, Ameisensäure und Mischungen davon.

8. Verwendung einer laminierbaren Tinte nach einem der vorherigen Ansprüche zur Herstellung einer Dekorschicht, vorzugsweise einer laminierten Dekorschicht eines Dekorpaneels.

9. Dekorpaneel aufweisend eine Dekorschicht mit einem Dekor hergestellt unter Verwendung einer laminierbaren Tinte nach einem der Ansprüche 1 bis 7.

10. Verfahren zur Herstellung eines Dekorpaneels nach dem vorhergehenden Anspruch, aufweisend zumindest die Verfahrensschritte:
a. Bereitstellen eines plattenförmigen Trägers,
b. Drucken eines Dekors mit laminierbaren Tinte nach einem der Ansprüche 1 bis 7 auf zumindest einen Teil des plattenförmigen Trägers,
c. Härten des Dekors mit elektromagnetischer Strahlung, vorzugsweise mit UV-Strahlung,
d. Laminieren zumindest eines Teilbereichs des Dekors mit einer Verschleiß- und/oder Deckschicht,
wobei beim Laminieren des Dekors die gehärtete Tinte thermisch aktiviert wird und mit dem Laminat einen Verbund ausbildet.

## Claims

1. Laminatable ink, comprising
a radiation-curable ink, in an amount, based on the laminatable ink, of ≥ 50 wt.-% to ≤ 99 wt.-% and
a thermally activatable matrix material, in an amount, based on the laminatable ink, of ≥ 1 wt.-% to ≤ 50 wt.-%,
wherein the matrix material comprises at least one thermally activatable polymer in an amount, based on the laminatable ink, of ≥ 1 wt.-% to ≤ 30 wt.-%, wherein the radiation-curable ink comprises a monomer, an oligomer, a photoinitiator, a stabilizer, an inhibitor, a dispersant and/or a dye, wherein the radiation-curable ink comprises a monomer in an amount of ≥ 25 wt.-% to ≤ 60 wt.-%, an oligomer in an amount of ≥ 5 wt.-% to ≤ 50 wt.-%, a photoinitiator in an amount of ≥ 1 wt.-% to ≤ 10 wt.-%, a stabilizer in an amount of ≥ 1 wt.-% to ≤ 3 wt.-%, a dispersant in an amount of ≥ 1 wt.-% to s 3 wt.-%, and a dye in an amount of ≥ 1 wt.-% to s 60 wt.-%, based on the laminatable ink, and the thermally activatable ink matrix material comprises a macromer in an amount of ≥ 1 wt.-% to ≤ 10 wt.-% and optionally a solvent in an amount of ≥ 0 wt.-% to ≤ 5 wt.-%, based on the laminatable ink, **characterized in that** the monomer comprises a monofunctional monomer selected from the group consisting of isobornyl acrylate, glycidyl methacrylate and mixtures thereof, and/or wherein the monomer comprises a difunctional monomer selected from the group consisting of 1,3-glycerol dimethacrylate, 1,10-decanedioldimethacrylate, tricyclodecane dimethanol diacrylate, 1,9-nonanediol dimethacrylate and mixtures thereof, and/or the monomer of trimethylolpropane trimethacrylate.

2. Laminatable ink according to claim 1, wherein the oligomer is selected from the group consisting of acrylic acrylate, urethane acrylate, melamine acrylate, epoxy acrylate, polyester acrylate and mixtures thereof.

3. Laminatable ink according to any one of claims 1 or 2, wherein the photoinitiator is selected from the group consisting of benzophenone, alpha ketone, thiophenyl morpholine propanone, thioxanthone and mixtures thereof.

4. Laminatable ink according to any one of the preceding claims, wherein the polymer is selected from the group consisting of polymethyl methacrylate, copolyacrylate, thermoplastic polyurethane, copolyamide, copolyester, liquid polybutadiene, colophony-modified polyisobutene and mixtures thereof.

5. Laminatable ink according to any one of the preceding claims, wherein the polymer has a number average molecular weight in a range of ≥ 700 g/mol to ≤ 20,000 g/mol.

6. Laminatable ink according to any one of claims 1 to 5, wherein the macromer is selected from the group consisting of polyoxyethylene chlorotriazine, polyoxypropylene chlorotriazine, polyethylene glycol, polyether, polystyrene butyl acrylate and mixtures thereof.

7. Laminatable ink according to any one of claims 1 to 6, wherein the solvent is selected from the group consisting of cyclohexanone, butanone, methyl ethyl ketone, xylene, ethyl acetate, ethyl lactate, dimethyl sulfoxide, dimethylformamide, formic acid and mixtures thereof.

8. Use of a laminatable ink according to any one of the preceding claims for producing a decorative layer, preferably a laminated decorative layer of a decorative panel.

9. Decorative panel comprising a decorative layer with a decoration produced by use of a laminatable ink according to any one of claims 1 to 7.

10. Method for producing a decorative panel according to the preceding claim, comprising at least the method steps:
a. providing a plate-shaped carrier;
b. printing a decoration with a laminatable ink according to any one of claims 1 to 7 onto at least a part of the plate-shaped carrier;
c. curing the decoration with electromagnetic radiation, preferably with UV radiation;
d. laminating at least a partial area of the decoration with a wear and/or cover layer,
wherein the cured ink is thermally activated during the lamination of the decoration and forms a bond with the laminate.

## Revendications

1. Encre laminable, comprenant
une encre durcissable par rayonnement dans une quantité, par rapport à l'encre laminable, de ≥ 50 % en poids jusqu'à ≤ 99 % en poids, et
un matériau matriciel activable thermiquement dans une quantité, par rapport à l'encre laminable, de ≥ 1 % en poids jusqu'à ≤ 50 % en poids,
où le matériau matriciel comprend au moins un polymère activable thermiquement dans une quantité, par rapport à l'encre laminable, de ≥ 1 % en poids jusqu'à ≤ 30 % en poids, et où l'encre durcissable par rayonnement comprend un monomère, un oligomère, un photoinitiateur, un stabilisateur, un inhibiteur, un agent de dispersion et/ou un colorant, l'encre durcissable par rayonnement contenant un monomère dans une quantité de ≥ 25 % en poids jusqu'à ≤ 60 % en poids, un oligomère dans une quantité de ≥ 5 % en poids jusqu'à ≤ 50 % en poids, un photoinitiateur dans une quantité de ≥ 1 % en poids jusqu'à ≤ 10 % en poids, un stabilisateur dans une quantité de ≥ 1 % en poids jusqu'à ≤ 3 % en poids, un agent de dispersion dans une quantité de ≥ 1 % en poids jusqu'à ≤ 3 % en poids, et un colorant dans une quantité de 1 % en poids jusqu'à ≤ 60 % en poids, par rapport à l'encre laminable, et le matériau matriciel activable thermiquement comprenant un macromère dans une quantité de ≥ 1 % en poids jusqu'à ≤ 10 % en poids et, en option, un solvant dans une quantité de ≥ 0 % en poids jusqu'à ≤ 5 % en poids, par rapport à l'encre laminable,
**caractérisé en ce que** le monomère comprend un monomère monofonctionnel sélectionné dans le groupe constitué d'acrylate d'isobornyle, de méthacrylate de glycidyle et de mélanges de ceux-ci, et/ou le monomère comprend un monomère difonctionnel sélectionné dans le groupe constitué de 1,3-glycérol diméthacrylate, de 1,10-décandiol diméthacrylate, de tricyclodécandiméthanol diacrylate, de 1,9-nonanediol diméthacrylate et de mélanges de ceux-ci, et/ou le monomère est un triméthacrylate de triméthylolpropane.

2. Encre laminable selon la revendication 1, où l'oligomère est sélectionné dans le groupe constitué d'acrylate d'acryl, d'acrylate d'uréthane, d'acrylate de mélamine, d'acrylate d'époxy, d'acrylate de polyester et de mélanges de ceux-ci.

3. Encre laminable selon l'une des revendications 1 ou 2, où le photoinitiateur est sélectionné dans le groupe constitué de benzophénone, d'alpha-cétones, de thiophénylmorpholinopropanone, de thioxanthone et de mélanges de ceux-ci.

4. Encre laminable selon l'une des revendications précédentes, où le polymère est sélectionné dans le groupe constitué de méthacrylate de polyméthyle, d'acrylate de copolymer, de polyuréthane thermoplastique, de copolyamide, de copolyester, de polybutadiène liquide, de polyisobutène modifié par de la colophane et de mélanges de ceux-ci.

5. Encre laminable selon l'une des revendications précédentes, où le polymère présente un poids moléculaire numérique dans une plage de ≥ 700 g/mol jusqu'à ≤ 20 000 g/mol.

6. Encre laminable selon l'une des revendications 1 à 5, où le macromère est sélectionné dans le groupe constitué de polyoxyéthylène chlorotriazine, de polyoxypropylène chlorotriazine, de polyéthylène glycol, de polyéther, de polystyrène butylacrylate et de mélanges de ceux-ci.

7. Encre laminable selon l'une des revendications 1 à 6, où le solvant est sélectionné dans le groupe constitué de cyclohexanone, de butanone, de méthyléthylcétone, de xylène, d'acétate d'éthyle, de lactate d'éthyle, de diméthylsulfoxyde, de diméthylformamide, d'acide formique et de mélanges de ceux-ci.

8. Utilisation d'une encre laminable selon l'une des revendications précédentes pour la fabrication d'une couche décorative, de préférence d'une couche décorative laminée d'un panneau décoratif.

9. Panneau décoratif comprenant une couche décorative avec un décor fabriqué en utilisant une encre laminable selon l'une des revendications 1 à 7.

10. Procédé de fabrication d'un panneau décoratif selon la revendication précédente, comprenant au moins les étapes suivantes :
a. fourniture d'un support en forme de plaque,
b. impression d'un décor avec une encre laminable selon l'une des revendications 1 à 7 sur au moins une partie du support en forme de plaque,
c. durcissement du décor par rayonnement électromagnétique, de préférence par rayonnement UV,
d. laminage d'au moins une partie du décor avec une couche de protection et/ou une couche de finition,
où, lors du laminage du décor, l'encre durcie est activée thermiquement et forme un composite avec le laminé.
